# EUROPEAN PATENT APPLICATION

(11) **EP 3 561 929 A1**
(43) Date of publication of application: **30.10.2019**
(21) Application number: 16898150.4
(22) Date of filing: 22.12.2016
(51) Int. Cl.: H01M 8/18, H01M 8/02

(54) **CELL FRAME, CELL STACK, AND REDOX FLOW BATTERY**

(71) Applicant: Sumitomo Electric Industries, Ltd., Osaka-shi, Osaka 541-0041 (JP)
(72) Inventor: KUWABARA, Masahiro, Osaka-shi Osaka 554-0024 (JP); MOTOI, Kenji, Osaka-shi Osaka 554-0024 (JP)
(74) Representative: Hoffmann Eitle
(86) International application number: PCT/JP2016/088518
(87) International publication number: WO 2018/116467

(57) **Abstract**

An introduction channel and a discharge channel, which is independent of and not connected to the introduction channel, are provided in each of a surface of a cell frame that faces a positive electrode and a surface of the cell frame that faces a negative electrode. The introduction channel introduces an electrolyte to a corresponding one of the electrodes. The discharge channel discharges the electrolyte from the corresponding one of the electrodes. The introduction channel includes an introduction rectifying groove and a plurality of introduction branch grooves that are connected to the introduction rectifying groove and spaced from each other. The discharge channel includes a discharge rectifying groove and a plurality of discharge branch grooves that are connected to the discharge rectifying groove and spaced from each other. The introduction branch grooves extend toward the discharge rectifying groove and the discharge branch grooves extend toward the introduction rectifying groove. Separation distances X between the introduction rectifying groove and the discharge branch grooves and separation distances Y between the discharge rectifying groove and the introduction branch grooves are in a range from 1 mm to 30 mm.

## Description

### Technical Field

The present invention relates to a cell frame, a cell stack, and a redox flow battery.

### Background Art

PTL 1 to PTL 4 describe a cell frame, a cell stack, and a redox flow battery including the cell stack. The cell stack includes positive electrodes, membranes, negative electrodes, and cell frames, which are stacked together, and supply/discharge plates that sandwich the stack. Each cell frame includes a bipolar plate interposed between a positive electrode and a negative electrode and a frame member that supports the bipolar plate at the outer periphery thereof. In this structure, a single cell is formed between the bipolar plates of adjacent cell frames.

PTL 1 to PTL 4 disclose a structure in which a surface of the bipolar plate that opposes the positive electrode and a surface of the bipolar plate that opposes the negative electrode each have a channel including a plurality of grooves to enable electrolytes to reliably spread over the positive electrode and the negative electrode in the cell.

### Citation List

### Patent Literature

PTL 1: Japanese Unexamined Patent Application Publication No. 2015-122230
PTL 2: Japanese Unexamined Patent Application Publication No. 2015-122231
PTL 3: Japanese Unexamined Patent Application Publication No. 2015-138771
PTL 4: Japanese Unexamined Patent Application Publication No. 2015-210849 Summary of Invention

A cell frame according to the present disclosure includes
a bipolar plate disposed between a positive electrode and a negative electrode of a redox flow battery, and a frame member that supports the bipolar plate at an outer periphery of the bipolar plate.

An introduction channel and a discharge channel, which is independent of and not connected to the introduction channel, are provided in each of a surface of the cell frame that faces the positive electrode and a surface of the cell frame that faces the negative electrode. The introduction channel introduces an electrolyte to a corresponding one of the electrodes. The discharge channel discharges the electrolyte from the corresponding one of the electrodes.

The introduction channel includes an introduction rectifying groove and a plurality of introduction branch grooves that are connected to the introduction rectifying groove and spaced from each other.

The discharge channel includes a discharge rectifying groove and a plurality of discharge branch grooves that are connected to the discharge rectifying groove and spaced from each other.

The introduction branch grooves extend toward the discharge rectifying groove and the discharge branch grooves extend toward the introduction rectifying groove.

Separation distances X between the introduction rectifying groove and the discharge branch grooves and separation distances Y between the discharge rectifying groove and the introduction branch grooves are in a range from 1 mm to 30 mm.

A cell stack according to the present disclosure includes
the cell frame according to the present disclosure.

A redox flow battery according to the present disclosure includes
the cell stack according to the present disclosure.

### Brief Description of Drawings

Figure 1 illustrates the operating principle of a redox flow battery according to a first embodiment.
Figure 2 is a schematic diagram illustrating the redox flow battery according to the first embodiment.
Figure 3 is a schematic diagram illustrating a cell stack according to the first embodiment.
Figure 4 is a plan view of a cell frame according to the first embodiment viewed from one side.
Figure 5 is a plan view of a bipolar plate of a cell frame according to a second embodiment viewed from one side.
Figure 6 is a plan view of a cell frame according to a third embodiment viewed from one side.

### Description of Embodiments

### [Problems to be Solved by Present Disclosure]

In recent years, natural-environment-friendly energy systems have been in demand, and redox flow batteries have been expected to have higher battery performance to satisfy such a demand. The inventors have studied a structure for improving the battery performance of a redox flow battery by focusing on channels on bipolar plates included in cell frames of the redox flow battery.

An object of the present disclosure is to provide a cell frame and a cell stack capable of improving the battery performance of a redox flow battery. Another object of the present disclosure is to provide a redox flow battery having high battery performance.

### [Advantages of Present Disclosure]

According to the cell frame and the cell stack of the present disclosure, the battery performance of a redox flow battery can be improved. The redox flow battery according to the present disclosure has high battery performance.

### [Description of Embodiments of Present Invention]

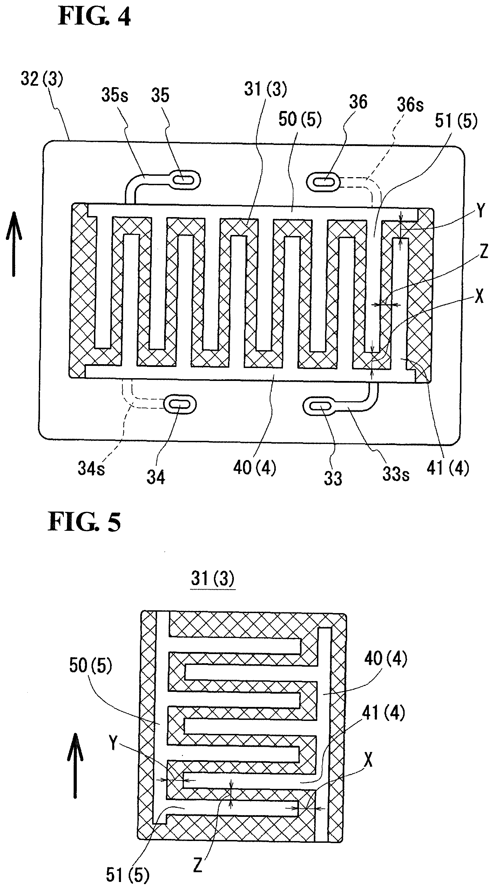

First, embodiments of the present invention will be described.
<1> A cell frame according to an embodiment includes
   a bipolar plate disposed between a positive electrode and a negative electrode of a redox flow battery, and a frame member that supports the bipolar plate at an outer periphery of the bipolar plate.
   An introduction channel and a discharge channel, which is independent of and not connected to the introduction channel, are provided in each of a surface of the cell frame that faces the positive electrode and a surface of the cell frame that faces the negative electrode. The introduction channel introduces an electrolyte to a corresponding one of the electrodes. The discharge channel discharges the electrolyte from the corresponding one of the electrodes.
   The introduction channel includes an introduction rectifying groove and a plurality of introduction branch grooves that are connected to the introduction rectifying groove and spaced from each other.
   The discharge channel includes a discharge rectifying groove and a plurality of discharge branch grooves that are connected to the discharge rectifying groove and spaced from each other.
   The introduction branch grooves extend toward the discharge rectifying groove and the discharge branch grooves extend toward the introduction rectifying groove.
   Separation distances X between the introduction rectifying groove and the discharge branch grooves and separation distances Y between the discharge rectifying groove and the introduction branch grooves are in a range from 1 mm to 30 mm.
   Since the introduction channel is provided in the cell frame, the electrolyte quickly spreads over the entire surface of the bipolar plate of the cell frame, and can be uniformly supplied to the entire surface of the corresponding electrode that is adjacent to the bipolar plate. In addition, since the discharge channel is provided in the cell frame, the electrolyte that has been supplied to the electrode and that contains an active material whose valence has changed can be uniformly and quickly collected from the entire surface of the electrode.
   In the above-described cell frame, the separation distances X between the introduction rectifying groove and the discharge branch grooves and the separation distances Y between the discharge rectifying groove and the introduction branch grooves are in the range from 1 mm to 30 mm. Here, the "separation distances X and Y" are the shortest distances from the rectifying grooves to the branch grooves. When, for example, the discharge branch grooves are tapered, the minimum distances from the tapered tips to the introduction rectifying groove are the separation distances X. In addition, the phrase "the separation distances X and Y are in the range from 1 mm to 30 mm" means that the separation distances X and Y along the bipolar plate are all in the range from 1 mm to 30 mm. For example, when four discharge branch grooves (introduction branch grooves) are formed in the bipolar plate, four separation distances X (separation distances Y) from the four discharge branch grooves (introduction branch grooves) to the introduction rectifying groove (discharge rectifying groove) are all in the range from 1 mm to 30 mm.
   When the separation distances X and the separation distances Y are greater than or equal to 1 mm, the occurrence of leak paths along which the electrolyte flows from the introduction channel to the discharge channel without passing the electrode can be reduced. The amount of active material that is discharged from each cell of the redox flow battery without changing the valence thereof can be reduced by reducing the occurrence of leak paths. Accordingly, the battery performance of the redox flow battery can be improved. When the separation distances X and the separation distances Y are less than or equal to 30 mm, gas that is generated in response to a battery reaction of the electrolyte and gas that is originally mixed in the electrolyte can be easily discharged from each cell of the redox flow battery. As a result, the occurrence of troubles due to accumulation of gas in each cell, for example, a reduction in the contact area between the electrolyte and the electrode due to the gas accumulated in the cell, can be reduced. Therefore, the occurrence of an increase in the cell resistance of the redox flow battery due to the troubles can be reduced. Gas will be mixed into the electrolyte when the electrolyte returns from a cell stack to a tank or when circulation of the electrolyte through the cell stack is started. In particular, when circulation of the electrolyte through the cell stack is started for the first time, or when circulation of the electrolyte is restarted after the electrolyte is drained from the cell stack in response to a stoppage of the circulation of the electrolyte, the cell resistance of the redox flow battery can be significantly increased if the gas in each cell is not completely discharged. However, such a problem does not easily occur in the cell frame according to the embodiment because the gas can be easily discharged from each cell. As described above, according to the cell frame of this embodiment, the occurrence of an increase in the cell resistance of the redox flow battery can be reduced, and the battery performance of the redox flow battery can be improved as a result.
<2> In one aspect of the cell frame according to the embodiment,
   the introduction rectifying groove, the discharge rectifying groove, the introduction branch grooves, and the discharge branch grooves may all be provided in the bipolar plate.
   A redox flow battery having improved battery performance can be manufactured by using the above-described cell frame. This is because the occurrence of leak paths and gas accumulation in each cell can be reduced since the separation distances between the rectifying grooves and the branch grooves provided in the bipolar plate of the cell frame are within a predetermined range.
<3> In another aspect of the cell frame according to the embodiment,
   the introduction rectifying groove and the discharge rectifying groove may be provided in the frame member, and
   the introduction branch grooves and the discharge branch grooves may be provided in the bipolar plate.
   A redox flow battery having improved battery performance can be manufactured by using the above-described cell frame. This is because the occurrence of leak paths and gas accumulation in each cell can be reduced since the separation distances between the rectifying grooves provided in the frame member and the branch grooves provided in the bipolar plate are within a predetermined range.
<4> In another aspect of the cell frame according to the embodiment,
   the introduction branch grooves and the discharge branch grooves may be alternately arranged, and
   the separation distances X and the separation distances Y may be greater than or equal to 1/10 of separation distances Z between the introduction branch grooves and the discharge branch grooves that are adjacent to each other, and less than or equal to 10 times the separation distances Z.
   The separation distances Z are the distances between the introduction branch grooves and the discharge branch grooves in a direction orthogonal to the flow direction of the electrolyte. The separation distances Z satisfy the above-described relationships with the separation distances X and Y at any position in the flow direction of the electrolyte. The flow direction of the electrolyte is the overall direction in which the electrolyte flows along the bipolar plate. When, for example, the bipolar plate is rectangular, the flow direction of the electrolyte is the direction from one side at which the electrolyte is supplied to another side at which the electrolyte is discharged. For example, in Fig. 4, which will be referred to in the first embodiment described below, the flow direction of the electrolyte is the upward direction indicated by the bold arrow.
   The limitation of <4> can be expressed as Z/10 ≤ X ≤ 10Z and Z/10 ≤ Y ≤ 10Z. When the separation distances X and Y and the separation distances Z satisfy these inequalities, the occurrence of leak paths from the introduction branch grooves to the discharge branch grooves and gas accumulation in each cell can be more effectively reduced. As a result, the battery performance of the redox flow battery can be improved.
<5> In another aspect of the cell frame according to the embodiment,
   a dispersion range of the separation distances X may be less than or equal to 3 mm.
   When the dispersion range of the separation distances X (difference between the maximum separation distance X and the minimum separation distance X) is less than or equal to 3 mm, the electrolyte uniformly moves from the introduction rectifying groove to the discharge branch grooves, and easily spreads over the entire surface of the electrode. The smaller the dispersion range, the more uniformly the electrolyte moves. Therefore, for example, the dispersion range is preferably set to 1 mm or less, or so that the difference between each separation distance X and the average value of the separation distances X is within ±4% of the average value. More preferably, the dispersion range is set to a tolerance range. In other words, the design values of the separation distances X may be set to the same value so that the separation distances X are substantially equal to each other. The separation distances X may be outside the range from 1 mm to 30 mm by an amount within a typical tolerance range (for example, within ±4%). For example, when the design value of the separation distances X is 1 mm, it is assumed that a separation distance X of 0.96 mm is within the range of the embodiment.
<6> In another aspect of the cell frame according to the embodiment,
   a dispersion range of the separation distances Y may be less than or equal to 3 mm.
   When the dispersion range of the separation distances Y is less than or equal to 3 mm, the electrolyte uniformly moves from the introduction branch grooves to the discharge rectifying groove, and the electrolyte can be smoothly discharged from the entire surface of the electrode. The smaller the dispersion range, the more uniformly the electrolyte moves. Therefore, for example, the dispersion range is preferably set to 1 mm or less, or so that the difference between each separation distance Y and the average value of the separation distances Y is within ±4% of the average value. More preferably, the dispersion range is set to a typical tolerance range. In other words, the design values of the separation distances Y may be set to the same value so that the separation distances Y are substantially equal to each other. The separation distances Y may also be outside the range from 1 mm to 30 mm by an amount within a typical tolerance range.
<7> In another aspect of the cell frame according to the embodiment,
   a dispersion range of the separation distances Z at different positions in a flow direction of the electrolyte may be less than or equal to 2 mm.
   When the dispersion range of the separation distances Z is less than or equal to 2 mm, the electrolyte uniformly moves from the introduction branch grooves to the discharge branch grooves, and easily spreads over the entire surface of the electrode. The dispersion range of the separation distances Z may be determined by measuring the separation distances Z at different positions (for example, three or more evenly spaced positions) in the flow direction of the electrolyte and comparing the measured separation distances Z. The smaller the dispersion range of the separation distances Z, the more uniformly the electrolyte moves. Therefore, for example, the dispersion range is preferably set to 1 mm or less, or so that the difference between each separation distance Z and the average value of the separation distances Z is within ±5% of the average value. More preferably, the dispersion range is set to a typical tolerance range. In other words, the introduction branch grooves and the discharge branch grooves, which are adjacent to each other, may be arranged at constant intervals so as to extend parallel to each other. The separation distances Z may also exceed 2 mm by an amount within a typical tolerance range.
<8> A cell stack according to an embodiment includes
   the cell frame according to the embodiment.
   A redox flow battery having improved battery performance can be manufactured by using the above-described cell stack. This is because the occurrence of leak paths and gas accumulation in each cell in the cell stack can be reduced owing to the bipolar plate according to the embodiment included in the cell frame of the cell stack.
<9> In one aspect of the cell stack according to the embodiment,
   the positive electrode and the negative electrode may each have a weight per unit area that is greater than or equal to 30 g/m².
   In general, it becomes difficult to discharge gas from each cell when the electrodes have a large weight per unit area. However, the cell stack according to the embodiment enables gas to be easily discharged from each cell because the cell stack according to the embodiment includes the cell frame according to the embodiment. Therefore, even when the electrodes of the cell stack according to the embodiment have a weight per unit area that is greater than or equal to 30 g/m², gas does not easily accumulate in the cell.
<10> A redox flow battery according to an embodiment includes
   the cell stack according to the embodiment.
   The redox flow battery according to the embodiment has high battery performance.
<11> In one aspect of the redox flow battery according to the embodiment,
   the electrolyte that circulates through the cell stack may have a viscosity that is less than or equal to 10⁻² Pa·s.
   In general, leak paths of the electrolyte easily occur when the electrolyte has a low viscosity. However, the redox flow battery according to the embodiment does not easily cause leak paths because the redox flow battery according to the embodiment includes the cell frame according to the embodiment. Therefore, even when the electrolyte of the redox flow battery according to the embodiment has a viscosity that is less than or equal to 10⁻² Pa·s, a reduction in the battery performance of the redox flow battery due to the leak paths does not easily occur.
<12> In another aspect of the redox flow battery according to the embodiment,
   a cell resistivity of the redox flow battery may be lower, by 30% or more, than a cell resistivity of a redox flow battery including a bipolar plate having surfaces without grooves.

A redox flow battery having a low cell resistivity is preferred because energy loss that occurs during charging/discharging is small and natural energy can be efficiently stored. Here, the "redox flow battery including a bipolar plate having surfaces without grooves" is a redox flow battery having the same structures, such as shapes, dimensions, and materials, as those of the redox flow battery according to the embodiment except for the presence/absence of the grooves.

### [Detailed Description of Embodiments of Present Invention]

Redox flow batteries (RF batteries) according to embodiments of the present disclosure will now be described. The present invention is not limited to the structures described in the embodiments, and is defined by the claims. The present invention is intended to include equivalents to the scope of the claims and all modifications within the scope of the claims.

### <First Embodiment>

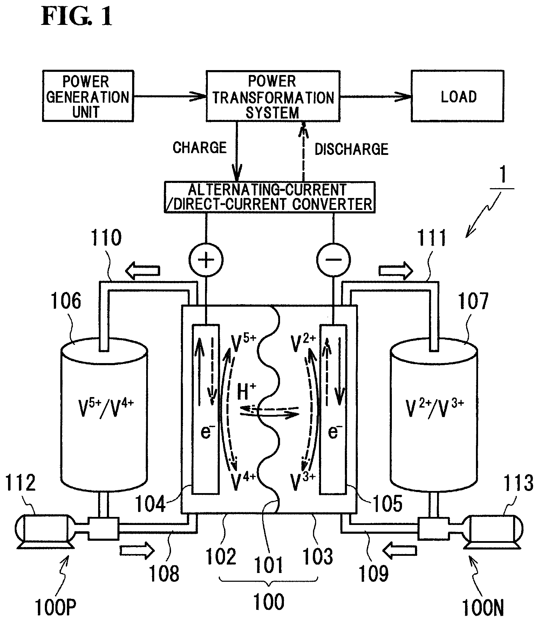

A redox flow battery (hereinafter referred to as an RF battery) according to an embodiment will be described with reference to Figs. 1 to 5.

### <<RF Battery>>

An RF battery is an electrolyte circulating storage battery used to store new energy, such as solar power and wind power. As shown in Fig. 1, which illustrates the operating principle of an RF battery 1, the RF battery 1 charges and discharges by utilizing a difference between an oxidation-reduction potential of active-material ions contained in a positive electrolyte and an oxidation-reduction potential of active-material ions contained in a negative electrolyte. The RF battery 1 includes cells 100, each of which is sectioned into a positive electrode cell 102 and a negative electrode cell 103 by a membrane 101 that allows hydrogen ions to pass therethrough.

The positive electrode cell 102 accommodates a positive electrode 104, and is connected to a positive electrolyte tank 106, which stores the positive electrolyte, by pipes 108 and 110. The pipe 108 is connected to a pump 112. These components 106, 108, 110, and 112 constitute a positive electrolyte circulation mechanism 100P that circulates the positive electrolyte. Similarly, the negative electrode cell 103 accommodates a negative electrode 105, and is connected to a negative electrolyte tank 107, which stores the negative electrolyte, by pipes 109 and 111. The pipe 109 is connected to a pump 113. These components 107, 109, 111, and 113 constitute a negative electrolyte circulation mechanism 100N that circulates the negative electrolyte. The electrolytes stored in the tanks 106 and 107 are circulated through the cells 102 and 103 by the pumps 112 and 113. When neither charging nor discharging is performed, the pumps 112 and 113 are stopped, so that the electrolytes are not circulated.

### <<Cell Stack>>

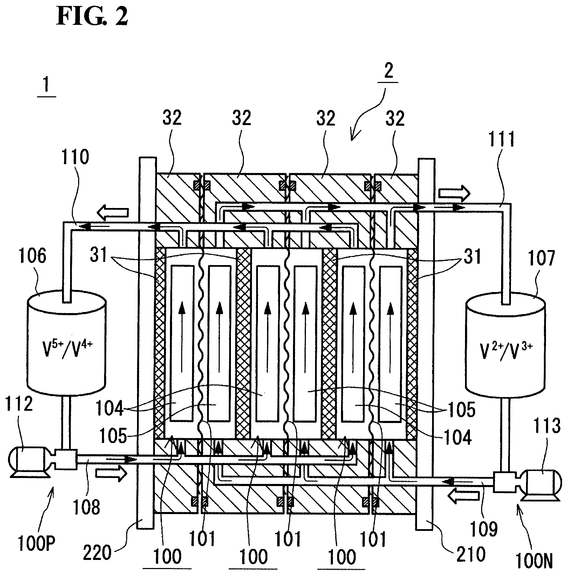

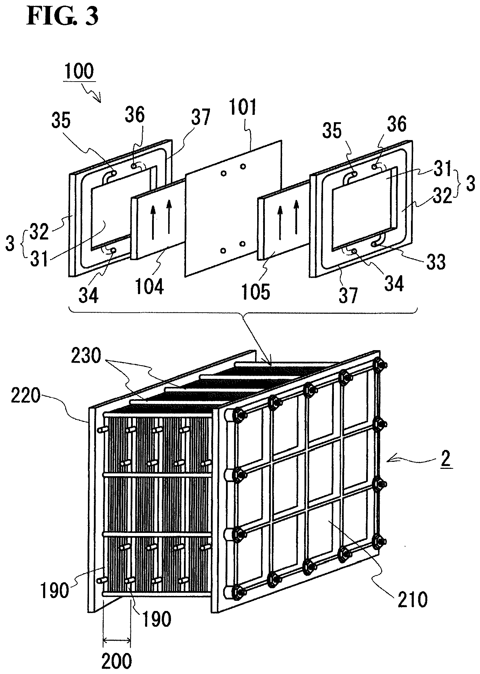

The above-described cells 100 are typically formed in a structure called a cell stack 2, as illustrated in Figs. 2 and 3. The cell stack 2 is formed by sandwiching a stacked structure called a sub-stack 200 (Fig. 3) with two end plates 210 and 220 at both ends and clamping them together with a clamping mechanism 230 (a plurality of the sub-stacks 200 are provided in the structure illustrated in Fig. 3).

Each sub-stack 200 (Fig. 3) includes cell frames 3, positive electrodes 104, membranes 101, and negative electrodes 105, which are stacked together, and supply/discharge plates 190 and 190 (see the bottom of Fig. 3; omitted in Fig. 2) that sandwich the stack. The RF battery 1 according to this embodiment having the above-described structure is characterized by, for example, the structure of the cell frames 3. The structure of each cell frame 3 will now be described in detail.

### <<Cell Frame>>

Each cell frame 3 includes a frame member 32, which has a window that extends therethrough, and a bipolar plate 31, which blocks the window. In other words, the frame member 32 supports the bipolar plate 31 at the outer periphery thereof. A positive electrode 104 is in contact with one side of the bipolar plate 31, and a negative electrode 105 is in contact with the other side of the bipolar plate 31. In this structure, a single cell 100 is formed between the bipolar plates 31 fitted in adjacent cell frames 3.

Supply manifolds 33 and 34 and discharge manifolds 35 and 36, which are formed in each cell frame 3 (see also Fig. 4), enable the electrolytes to flow into and out of each cell 100 through the supply/discharge plates 190 and 190 illustrated in Fig. 3. The positive electrolyte is supplied from the supply manifold 33 to the positive electrode 104 through an inlet slit 33s (Fig. 4) formed in one side of the cell frame 3 (front side in Fig. 4), and is discharged to the discharge manifold 35 through an outlet slit 35s (Fig. 4) formed in an upper portion of the cell frame 3. Similarly, the negative electrolyte is supplied from the supply manifold 34 to the negative electrode 105 through an inlet slit 34s (Fig. 4) formed in the other side of the cell frame 3 (back side in Fig. 4), and is discharged to the discharge manifold 36 through an outlet slit 36s (Fig. 4) formed in the upper portion of the cell frame 3. Loop-shaped sealing members 37 (Fig. 3), such as flat gaskets, are disposed between the cell frames 3 to prevent leakage of the electrolytes from the sub-stack 200.

In this embodiment, as illustrated in the plan view of Fig. 4, an introduction channel 4 is formed in a front surface of the bipolar plate 31 (surface visible in Fig. 4) so that the positive electrolyte supplied to the front surface of the bipolar plate 31 through the inlet slit 33s evenly spreads over the entire surface of the positive electrode 104 (Fig. 3). In addition, a discharge channel 5 is also formed so that the positive electrolyte containing a positive electrode active material, whose valence has changed at the positive electrode 104 (Fig. 3), is quickly collected from the entire surface of the positive electrode 104 and guided to the outlet slit 35s. In Fig. 4, the region of the bipolar plate 31 in which neither the introduction channel 4 nor the discharge channel 5 is formed is cross-hatched. As illustrated in Fig. 4, the introduction channel 4 and the discharge channel 5 are independent of and not connected to each other. The overall direction in which the electrolyte flows along the bipolar plate 31 (flow direction) is upward in Fig. 4, as indicated by the bold arrow at the left in Fig. 4.

An introduction channel through which the negative electrolyte is supplied to the negative electrode 105 (Fig. 3) and a discharge channel through which the negative electrolyte is discharged are formed in a back surface of the bipolar plate 31. The structure of the introduction channel and the discharge channel in the back surface of the bipolar plate 31 is the same as that of the introduction channel 4 and the discharge channel 5 in Fig. 4, and description thereof will thus be omitted. The structure around the positive electrode will be mainly described below.

The introduction channel 4 includes an introduction rectifying groove 40 and a plurality of introduction branch grooves 41. The introduction rectifying groove 40 of this embodiment extends in a direction that crosses the flow direction (direction orthogonal to the flow direction in this embodiment), and is connected to the inlet slit 33s. The introduction branch grooves 41 extend in a direction that crosses the introduction rectifying groove 40 (direction orthogonal to the introduction rectifying groove 40 in this embodiment). The direction in which the introduction branch grooves 41 extend is substantially parallel to the flow direction, and is a direction toward a discharge rectifying groove 50, which will be described below. The introduction branch grooves 41 are spaced from each other. The above-described structure of the introduction channel 4 enables the positive electrolyte introduced to the bipolar plate 31 through the inlet slit 33s to spread in the direction in which the introduction rectifying groove 40 extends and flow along the introduction branch grooves 41 over the entire surface of the bipolar plate 31. While the positive electrolyte flows from the grooves 40 and 41 to grooves 50 and 51, the positive electrolyte soaks into the positive electrode 104 (Fig. 3) that faces the front surface of the bipolar plate 31, and the valence of the positive electrode active material contained in the positive electrolyte changes.

The introduction branch grooves 41 may extend parallel to the flow direction as in this embodiment, or be at an angle relative to the flow direction. Alternatively, the introduction branch grooves 41 may have a meandering shape. The introduction branch grooves 41 may have a constant width, as illustrated, or a varying width. For example, the introduction branch grooves 41 may have a width that decreases toward the tips thereof. In such a case, the introduction branch grooves 41 have a trapezoidal or triangular shape.

The discharge channel 5 includes a discharge rectifying groove 50 and a plurality of discharge branch grooves 51. The discharge rectifying groove 50 of this embodiment extends in a direction that crosses the flow direction (direction orthogonal to the flow direction in this embodiment), and is connected to the outlet slit 35s. The discharge branch grooves 51 extend in a direction that crosses the discharge rectifying groove 50 (direction orthogonal to the discharge rectifying groove 50 in this embodiment). The direction in which the discharge branch grooves 51 extend is opposite to the flow direction, and is a direction toward the above-described introduction rectifying groove 40. The discharge branch grooves 51 are spaced from each other. The discharge branch grooves 51 and the above-described introduction branch grooves 41 are alternately arranged in the direction in which the discharge branch grooves 51 are spaced from each other. The flows of the positive electrolyte collected from the positive electrode 104 (Fig. 3) through the discharge branch grooves 51 are combined together in the discharge rectifying groove 50. Then, the positive electrolyte is discharged to the outlet slit 35s. Since the discharge branch grooves 51 are distributed over the entire surface of the bipolar plate 31, the positive electrolyte can be collected from the entire surface of the positive electrode 104 (Fig. 3).

The discharge branch grooves 51 may extend parallel to the flow direction as in this embodiment, or be at an angle relative to the flow direction. Alternatively, the discharge branch grooves 51 may have a meandering shape. The discharge branch grooves 51 may have a constant width, as illustrated, or a varying width. For example, the discharge branch grooves 51 may have a width that decreases toward the tips thereof. In such a case, the discharge branch grooves 51 have a trapezoidal or triangular shape.

Separation distances X between the introduction rectifying groove 40 and the discharge branch grooves 51 and separation distances Y between the discharge rectifying groove 50 and the introduction branch grooves 41 are in the range from 1 mm to 30 mm. In this embodiment, six discharge branch grooves 51 are provided, and the six separation distances X between the introduction rectifying groove 40 and the six discharge branch grooves 51 are all in the range from 1 mm to 30 mm. Also, in this embodiment, six introduction branch grooves 41 are provided, and the six separation distances Y between the discharge rectifying groove 50 and the six introduction branch grooves 41 are all in the range from 1 mm to 30 mm. Although the separation distances X and Y are substantially equal in this embodiment, the separation distances X and Y may instead be different. For example, the separation distances X may be 10 mm for three of the six branch grooves 51, and 20 mm for the remaining branch grooves 51 (this also applies to the separation distances Y). Alternatively, the separation distances X and Y may differ individually. The separation distances X and Y are not limited as long as all of the separation distances X and Y are in the range from 1 to 30 mm.

When the separation distances X (Y) are greater than or equal to 1 mm, the occurrence of leak paths along which the positive electrolyte intensively flows from the introduction channel 4 to the discharge channel 5 can be reduced. The amount of active material that is discharged from each cell 100 of the RF battery 1 (see Figs. 1 and 2) without changing the valence thereof can be reduced by reducing the occurrence of leak paths. Accordingly, the battery performance of the RF battery 1 can be improved. When the separation distances X (Y) are less than or equal to 30 mm, gas that is generated in response to a battery reaction of the positive electrolyte, gas that is originally mixed in the positive electrolyte, and gas that is mixed into the positive electrolyte during circulation of the positive electrolyte can be easily discharged from each cell 100 of the RF battery 1. As a result, the occurrence of troubles due to accumulation of gas in each cell 100, for example, an increase in the cell resistance of the RF battery 1 caused by a reduction in contact area between the positive electrolyte and the positive electrode 104 due to the gas, can be reduced. The battery performance of the RF battery 1 can be improved in accordance with the amount by which the increase in the cell resistance is reduced. The separation distances X and Y are preferably in the range from 2 mm to 20 mm, and more preferably in the range from 3 mm to 10 mm.

The dispersion range of the separation distances X between the introduction rectifying groove 40 and the discharge branch grooves 51 is preferably less than or equal to 3 mm. In such a case, the positive electrolyte uniformly moves from the introduction rectifying groove 40 to the discharge branch grooves 51, and easily spread over the entire surface of the positive electrode 104 (see Figs. 1 to 3). This effect increases as the dispersion range of the separation distances X decreases. Therefore, the dispersion range is preferably less than or equal to 1 mm, and more preferably, substantially 0 mm (in other words, the separation distances X are preferably set to the same value). The dispersion range of the separation distances Y between the discharge rectifying groove 50 and the introduction branch grooves 41 is preferably less than or equal to 3 mm. In such a case, the positive electrolyte uniformly moves from the introduction branch grooves 41 to the discharge rectifying groove 50, and can be smoothly discharged from the entire surface of the positive electrode 104 (see Figs. 1 to 3). This effect increases as the dispersion range of the separation distances Y decreases. Therefore, the separation distances Y are preferably less than or equal to 1 mm, and more preferably, substantially 0 mm (in other words, the separation distances Y are preferably set to the same value).

Separation distances Z between the introduction branch grooves 41 and the discharge branch grooves 51, which are adjacent to each other, preferably satisfy Z/10 ≤ X ≤ 10Z and Z/10 ≤ Y ≤ 10Z. The separation distances Z satisfy these relationships with the separation distances X and Y at any position in the flow direction of the electrolyte.

When the separation distances X and Y and the separation distances Z satisfy the above inequalities, the occurrence of leak paths from the introduction branch grooves 41 to the discharge branch grooves 51 and accumulation of gas in each cell 100 (Fig. 2) can be more effectively reduced. As a result, the battery performance of the RF battery 1 (Fig. 2) can be improved. The separation distances X and the separation distances Z more preferably satisfy Z/8 ≤ X ≤ 9Z, and still more preferably satisfy Z/3 ≤ X ≤ 7Z. The separation distances Y and the separation distances Z more preferably satisfy Z/8 ≤ Y ≤ 9Z, and still more preferably satisfy Z/3 ≤ Y ≤ 7Z.

The dispersion range of the separation distances Z is preferably less than or equal to 2 mm. The dispersion range of the separation distances Z may be determined by measuring the separation distances Z at different positions (for example, three or more evenly spaced positions) in the flow direction of the electrolyte and comparing the measured separation distances Z. When the dispersion range of the separation distances Z is small, the introduction branch grooves 41 and the discharge branch grooves 51, which are adjacent to each other, are arranged at substantially constant intervals so as to extend parallel to each other. According to this structure, the positive electrolyte uniformly moves from the introduction branch grooves 41 to the discharge branch grooves 51, and easily spreads over the entire surface of the positive electrode 104 (see Figs. 1 to 3). The dispersion range of the separation distances Z is preferably as small as possible. For example, the dispersion range of the separation distances Z is preferably 1 mm or less, and more preferably, substantially 0 mm (in other words, the separation distances Z are preferably set to the same value).

### <<Advantages>>

The battery performance of the RF battery 1 can be improved by using bipolar plates 31 which each include the introduction channel 4 and the discharge channel 5 described above with reference to Fig. 4. This is because when the introduction channel 4 and the discharge channel 5 satisfy certain conditions, leak paths do not easily occur in each cell 100 of the RF battery 1, and gas contained in the electrolyte does not easily accumulate in each cell 100.

### <<Other Structures>>

When the weights per unit area of the electrodes 104 and 105 are increased, the contact areas between the electrodes 104 and 105 (see Fig. 3) and the electrolytes can be increased, and the battery performance of the RF battery 1 (see Figs. 1 and 2) can be improved accordingly. However, gaps around the electrodes 104 and 105 become smaller and more complex, and therefore gas more easily accumulates in each cell 100. Since the RF battery 1 of this embodiment includes the bipolar plates 31 which each have the structure illustrated in Fig. 4, the gas can be easily discharged from each cell 100. Accordingly, the weights per unit area of the electrodes 104 and 105 can be increased. More specifically, the electrodes 104 and 105 may each have a weight per unit area that is, for example, greater than or equal to 30 g/m². The weight per unit area may instead be greater than or equal 50 g/m². The upper limit of the weight per unit area may be, for example, 500 g/m².

When the viscosities of the electrolytes are reduced, the loads on the pumps 112 and 113 (see Figs. 1 and 2), which circulate the electrolytes, can be reduced and the operating cost of the RF battery 1 can be reduced accordingly. However, leak paths of the electrolytes can occur more easily. Since the RF battery 1 of this embodiment includes the bipolar plates 31 which each have the structure illustrated in Fig. 4, leak paths do not easily occur. Therefore, the viscosities of the electrolytes can be reduced. More specifically, the electrolytes may each have a viscosity that is lower than or equal to 10⁻² Pa·s. The viscosity may instead be lower than or equal to 8×10⁻³ Pa·s or less. The lower limit of the viscosity is 10⁻³ Pa·s.

### <Second Embodiment>

A second embodiment, in which an introduction channel 4 and a discharge channel 5 formed in a bipolar plate 31 differ from those in the first embodiment, will be described with reference to Fig. 5. The structures other than the bipolar plate 31 may be substantially similar to those in the first embodiment. Therefore, Fig. 5 illustrates only the bipolar plate 31, and description of the structures other than the bipolar plate 31 will be omitted in the second embodiment.

The bipolar plate 31 illustrated in Fig. 5 is long in the flow direction indicated by the bold arrow. The introduction channel 4 and the discharge channel 5 provided in the bipolar plate 31 respectively include an introduction rectifying groove 40 and a discharge rectifying groove 50 that extend in the flow direction. Also in this structure, separation distances X between the introduction rectifying groove 40 and discharge branch grooves 51 and separation distances Y between the discharge rectifying groove 50 and introduction branch grooves 41 are in the range from 1 mm to 30 mm. Also, the separation distances X and Y and separation distances Z preferably satisfy Z/10 ≤ X ≤ 10Z and Z/10 ≤ Y ≤ 10Z.

### <<Advantages>>

Also in the structure of this embodiment, leak paths do not easily occur in each cell 100 of the RF battery 1 (see Figs. 1 and 2), and gas contained in the electrolyte does not easily accumulate in each cell 100. Accordingly, the battery performance of the RF battery 1 can be improved.

### <Third Embodiment>

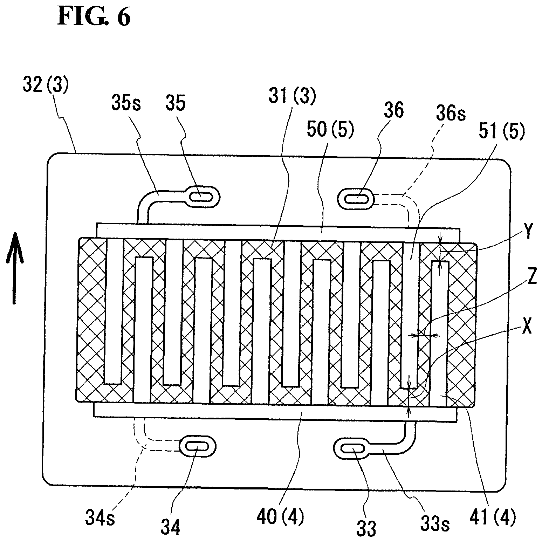

A third embodiment, in which each cell frame 3 includes a frame member 32 having rectifying grooves 40 and 50 and a bipolar plate 31 having branch grooves 41 and 51, will be described with reference to Fig. 6.

As illustrated in Fig. 6, in each cell frame 3 of this embodiment, an introduction rectifying groove 40 is provided in an inner peripheral portion of the frame member 32 (portion near a window in which the bipolar plate 31 is fitted) at a side adjacent to supply manifolds 33 and 34. A discharge rectifying groove 50 is provided in the inner peripheral portion of the frame member 32 at a side adjacent to discharge manifolds 35 and 36. The introduction rectifying groove 40 extends in a direction in which the supply manifolds 33 and 34 are arranged, and the top edge thereof (edge opposing the discharge manifolds 35 and 36) is connected to the window. The discharge rectifying groove 50 extends in a direction in which the discharge manifolds 35 and 36 are arranged, and the bottom edge thereof (edge opposing the supply manifolds 33 and 34) is connected to the window.

Introduction branch grooves 41 and discharge branch grooves 51 are provided in the bipolar plate 31 so as to be arranged alternately. The introduction branch grooves 41 are connected to the introduction rectifying groove 40, but are not connected to the discharge rectifying groove 50. The discharge branch grooves 51 are connected to the discharge rectifying groove 50, but are not connected to the introduction rectifying groove 40.

Also in the above-described structure, the occurrence of leak paths in each cell 100 and accumulation of gas in each cell 100 can be reduced by setting separation distances X, Y, and Z as in the first embodiment, and the battery performance of the RF battery 1 can be improved accordingly. In this embodiment, similar to the first embodiment, the separation distances X, Y, and Z are respectively the separation distances between the introduction rectifying groove 40 and the discharge branch grooves 51, the separation distances between the discharge rectifying groove 50 and the introduction branch grooves 41, and the separation distances between the introduction branch grooves 41 and the discharge branch grooves 51, which are adjacent to each other.

### <<Advantages>>

Also in the structure of this embodiment, leak paths do not easily occur in each cell 100 of the RF battery 1 (see Figs. 1 and 2), and gas contained in the electrolyte does not easily accumulate in each cell 100. Accordingly, the battery performance of the RF battery 1 can be improved.

### <<Others>>

The structure in which the rectifying grooves 40 and 50 are provided in the frame member 32 and the branch grooves 41 and 52 are provided may be applied to cell frames that are long in the flow direction of the electrolyte as in the second embodiment.

### <Test Example 1>

A plurality of RF batteries 1 (test objects A to G) including the cell frames 3 including the bipolar plates 31 having the structure illustrated in Fig. 4 with different separation distances X, Y, and Z were prepared. In addition, an RF battery (test object H) having surfaces without grooves (introduction channel and discharge channel) was also prepared. The electrodes 104 and 105 (see Figs. 1 and 2) had a weight per unit area of 150 to 200 g/m², and the electrolytes had a viscosity of 4×10⁻³ Pa·s. The cell resistivity of each RF battery 1 was measured by performing a charge/discharge test with the RF battery 1. In the charge/discharge test, a discharge end voltage was set to 1 V, and a charge end voltage was set to 1.6 V A charge/discharge curve was obtained on the basis of the result of the charge/discharge test, and the cell resistivity in the third cycle was evaluated on the basis of the charge/discharge curve.

### •Test Object A

In each bipolar plate 31 of test object A, the separation distances X and Y were 1 mm, and the separation distances Z were 1 mm. The dispersion ranges of the separation distances X, Y, and Z were all within tolerance. The cell resistivity of test object A was 0.63 Ω·cm².

### •Test Object B

In each bipolar plate 31 of test object B, the separation distances X and Y were 3 mm, and the separation distances Z were 3 mm. The dispersion ranges of the separation distances X, Y, and Z were all within tolerance. Other conditions (shapes, dimensions, materials, etc.) were exactly the same as those of test object A. The cell resistivity of test object B was 0.58 Ω·cm².

### •Test Object C

In each bipolar plate 31 of test object C, the separation distances X and Y were 7 mm, and the separation distances Z were 7 mm. The dispersion ranges of the separation distances X, Y, and Z were all within tolerance. Other conditions were exactly the same as those of test object A. The cell resistivity of test object C was 0.57 Ω·cm².

### •Test Object D

In each bipolar plate 31 of test object D, the separation distances X and Y were 3 mm, and the separation distances Z were 1 mm. The dispersion ranges of the separation distances X, Y, and Z were all within tolerance. Other conditions were exactly the same as those of test object A. The cell resistivity of test object D was 0.65 Ω·cm².

### •Test Object E

In each bipolar plate 31 of test object E, the separation distances X and Y were 3 mm, and the separation distances Z were 7 mm. The dispersion ranges of the separation distances X, Y, and Z were all within tolerance. Other conditions were exactly the same as those of test object A. The cell resistivity of test object E was 0.55 Ω·cm².

### •Test Object F

In each bipolar plate 31 of test object F, the separation distances X and Y were 26 mm, and the separation distances Z were 4 mm. The dispersion ranges of the separation distances X, Y, and Z were all within tolerance. Other conditions were exactly the same as those of test object A. The cell resistivity of test object F was 0.57 Ω·cm².

### •Test Object G

In each bipolar plate 31 of test object G, the separation distances X and Y were 41 mm, and the separation distances Z were 1 mm. The dispersion ranges of the separation distances X, Y, and Z were all within tolerance. Other conditions (shapes, dimensions, materials, etc.) were exactly the same as those of test object A. The cell resistivity of test object G was 0.71 Ω·cm².

### •Test Object H

Test object H was an RF battery including cell frames without the introduction channel and discharge channel. Conditions other than the presence/absence of the channels (shapes, dimensions, materials, etc.) were exactly the same as those of test object A. The cell resistivity of test object H was 0.97 Ω·cm².

### <<Summary of Test Results>>

A comparison between the cell resistivities of the above-described test objects shows that when the separation distances X and Y are in the range from 1 mm to 30 mm, the cell resistivity of the RF battery 1 can be reduced. The cell resistivity of the RF battery 1 can also be reduced when the separation distances X and Y and the separation distances Z satisfy Z/10 ≤ X ≤ 10Z and Z/10 ≤ Y ≤ 10Z. Furthermore, a comparison of test objects A to F, in which the separation distances X and Y of the channels 4 and 5 were in the range from 1 mm to 30 mm, with test object H, which did not include the channels, shows that the cell resistivities of test objects A to F were lower than the cell resistivity of test object H by 30% or more. When the RF battery 1 has a small cell resistivity, energy loss that occurs during charging/discharging is small, and the RF battery 1 operates efficiently.

### Reference Signs List

1 RF battery (redox flow battery)
2 cell stack
3 cell frame
31 bipolar plate 32 frame member
33, 34 supply manifold 35, 36 discharge manifold
33s, 34s inlet slit 35s, 36s outlet slit
37 loop-shaped sealing member
4 introduction channel 40 introduction rectifying groove 41 introduction branch groove
5 discharge channel 50 discharge rectifying groove 51 discharge branch groove
100 cell 101 membrane 102 positive electrode cell 103 negative electrode cell
100P positive electrolyte circulation mechanism 100N negative electrolyte circulation mechanism
104 positive electrode 105 negative electrode 106 positive electrolyte tank
107 negative electrolyte tank 108, 109, 110, 111 pipe
112, 113 pump
190 supply/discharge plate 200 sub-stack
210, 220 end plate
230 clamping mechanism

## Claims

1. A cell frame comprising a bipolar plate disposed between a positive electrode and a negative electrode of a redox flow battery, and a frame member that supports the bipolar plate at an outer periphery of the bipolar plate,
wherein an introduction channel and a discharge channel, which is independent of and not connected to the introduction channel, are provided in each of a surface of the cell frame that faces the positive electrode and a surface of the cell frame that faces the negative electrode, the introduction channel introducing an electrolyte to a corresponding one of the electrodes, the discharge channel discharging the electrolyte from the corresponding one of the electrodes,
wherein the introduction channel includes an introduction rectifying groove and a plurality of introduction branch grooves that are connected to the introduction rectifying groove and spaced from each other,
wherein the discharge channel includes a discharge rectifying groove and a plurality of discharge branch grooves that are connected to the discharge rectifying groove and spaced from each other,
wherein the introduction branch grooves extend toward the discharge rectifying groove and the discharge branch grooves extend toward the introduction rectifying groove, and
wherein separation distances X between the introduction rectifying groove and the discharge branch grooves and separation distances Y between the discharge rectifying groove and the introduction branch grooves are in a range from 1 mm to 30 mm.

2. The cell frame according to Claim 1, wherein the introduction rectifying groove, the discharge rectifying groove, the introduction branch grooves, and the discharge branch grooves are all provided in the bipolar plate.

3. The cell frame according to Claim 1, wherein the introduction rectifying groove and the discharge rectifying groove are provided in the frame member, and
wherein the introduction branch grooves and the discharge branch grooves are provided in the bipolar plate.

4. The cell frame according to any one of Claims 1 to 3, wherein the introduction branch grooves and the discharge branch grooves are alternately arranged, and
wherein the separation distances X and the separation distances Y are greater than or equal to 1/10 of separation distances Z between the introduction branch grooves and the discharge branch grooves that are adjacent to each other, and less than or equal to 10 times the separation distances Z.

5. The cell frame according to any one of Claims 1 to 4, wherein a dispersion range of the separation distances X is less than or equal to 3 mm.

6. The cell frame according to any one of Claims 1 to 5, wherein a dispersion range of the separation distances Y is less than or equal to 3 mm

7. The cell frame according to any one of Claims 1 to 6, wherein a dispersion range of the separation distances Z at different positions in a flow direction of the electrolyte is less than or equal to 2 mm.

8. A cell stack comprising the cell frame according to any one of Claims 1 to 6.

9. The cell stack according to Claim 8, wherein the positive electrode and the negative electrode each have a weight per unit area that is greater than or equal to 30 g/m².

10. A redox flow battery comprising the cell stack according to Claim 9.

11. The redox flow battery according to Claim 10, wherein the electrolyte that circulates through the cell stack has a viscosity that is less than or equal to 10⁻² Pa s.

12. The redox flow battery according to Claim 10 or 11, wherein a cell resistivity of the redox flow battery is lower, by 30% or more, than a cell resistivity of a redox flow battery including a bipolar plate having surfaces without grooves.
